# EUROPEAN PATENT SPECIFICATION

(11) **EP 1 579 962 B1**
(45) Date of publication and mention of the grant of the patent: **23.04.2008**
(21) Application number: 05004557.4
(22) Date of filing: 02.03.2005
(51) Int. Cl.: B25J 19/00

(54) **Robot for carrying out industrial operations by a laser beam transmitted by an optical fiber arranged inside the robot**
Roboter zum Ausführen industrieller Arbeiten mittels eines durch eine im Inneren des Roboters angeordnete optische Faser geleiteten Laserstrahls
Robot pour l'exécution de tâches industrielles au moyen d'un rayon laser transmis par une fibre optique disposée à l'intérieur du robot

(30) Priority: 23.03.2004 IT TO20040193
(43) Date of publication of application: 28.09.2005
(73) Proprietor: COMAU S.p.A., 10095 Grugliasco (Torino) (IT)
(72) Inventor: Deplano, Stefano, 10134 Torino (IT)
(74) Representative: Notaro, Giancarlo

(56) References cited:
- EP-A- 0 265 661
- US-A- 4 767 257
- PATENT ABSTRACTS OF JAPAN vol. 017, no. 690 (M-1530), 16 December 1993 (1993-12-16) -& JP 05 237684 A (MATSUSHITA ELECTRIC IND CO LTD), 17 September 1993 (1993-09-17)
- PATENT ABSTRACTS OF JAPAN vol. 016, no. 388 (M-1297), 18 August 1992 (1992-08-18) -& JP 04 127992 A (MATSUSHITA ELECTRIC IND CO LTD), 28 April 1992 (1992-04-28)

## Description

The present invention relates to robots used for carrying out industrial operations by a laser beam, as defined in the preamble of claim 1. Such a robot is known from JP-A-05 237 684.

The same Applicant has been developing and marketing for a long time a robot in which the optical fiber supplying the laser beam to the laser focusing head is arranged outside the robot arm, thus being it necessary to arrange suitable supports outside the robot arm. The Applicant has also been using for a long time robots with hollow wrist (see EP 0 873 826 B1) and comprising three tubular elements rotatably mounted each other around three respective coplanar axes, and wherein the intermediate forms builds an angle other than 90° with respect to each of the other two axes. In said known solution, electric supply cables and pipes for supply fluids associated to a tool (for instance an electric spot welding gun) mounted onto the support of the robot wrist are led through said hollow wrist. Said document does not mention or suggest to arrange through said hollow wrist also an optical fiber for supplying a power laser beam to a laser focusing head.

It was also proposed to use the through cavity of a robot hollow wrist for the passage of optical fibers designed for signal transmission to and from a device mounted onto the robot wrist support. This solution can be easily put into practice, since optical fibers designed for signal transmission have a relatively small diameter and are therefore more flexible, so that deformations undergone by them as a result of robot movements during its normal operation do not generate too high stresses onto said fibers.

Obviously, in practical embodiments optical fibers comprise a central core representing the real optical fiber and an outer protective coating. In the present description, the term optical fibers refers both to the purely theoretical case of a "naked" optical fiber, and to the case of an optical fiber provided with a coating.

JP-A-05 237 684 discloses a robot in which an optical fiber supplying a laser power beam to a focusing head is arranged inside an articulated arm and a hollow wrist.

In order to propose a new robot for carrying out industrial operations through laser beam that is simpler and smaller than known robots and that is at the same time efficient and reliable, the object of the present invention is a robot having all the features according to claim 1.

Preferred embodiments of the invention are defined in the dependent claims.

The invention will now be described with reference to the accompanying drawings, provided as a mere nonlimiting example, in which:
Figures 1 to 3 are sectional views of variants of articulated arms of industrial robots which do not belong to the present invention.
Figure 4 is a sectional view of an articulated arm of an industrial robot according to the invention, provided with a hollow wrist and a mirror reflecting device.

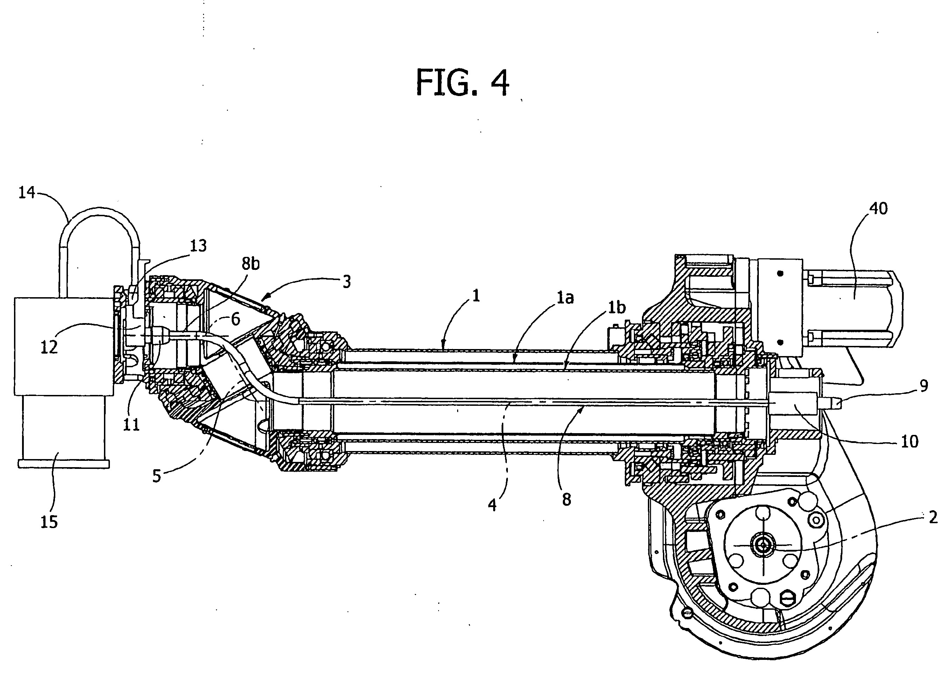

In the drawings number 1 refers globally to a robot articulated arm designed to be articulated around an axis 2 with respect to a robot adjacent structure. A robot wrist 3 with a general hollow shape is mounted.at the distal end of the articulated arm. The structure of the hollow wrist 3 is basically the same as the one shown in the previous European patent EP 0 873 826 B1. This structure is not shown here in further detail since it is known per se and further since, taken per se, it does not fall within the scope of the invention. Let us just mention here the fact that the wrist 3 includes three tubular elements rotatably mounted in sequence relative to each other around respective axes 4, 5, 6, which are coplanar one to the other and are arranged as shown in the figure, the intermediate axis 5 forming an angle other than 90° with respect to each of the two axes 4, 6. The figure also shows one of the electric motors 40 which control the rotations of the wrist 3 by means of tubular, concentric drive shafts 1a, 1b arranged inside the structure of the arm 1 and on their turn defining an inner channel used to the purposes disclosed below. A support 7 for fastening a tool in the specific case a focusing head of a laser beam (shown only in Figure 4) is mounted onto the end portion of the wrist 3,

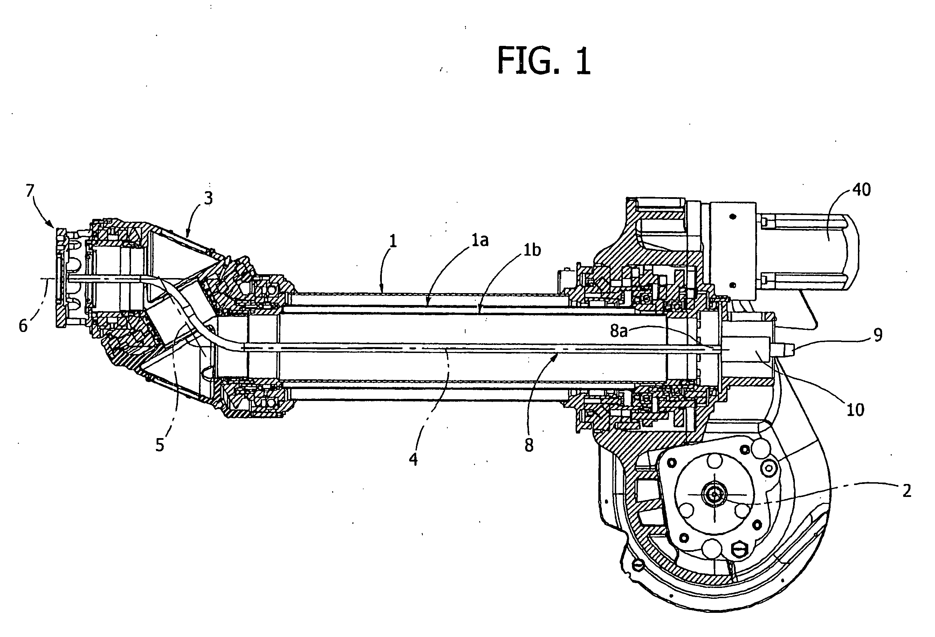

As can be clearly seen in Figure 1, the inner cavity of the arm 1 and of the wrist 3 is used for fastening an optical fiber 8 (meaning the real optical fiber together with its coating) for supplying the laser power beam to the laser focusing head. In the drawings construction details of the laser focusing head mounted onto the support 7 are not shown since it can be made in any known way. For the same reason, Figure 1 does not show the end portion of the optical fiber 8 connected to the laser focusing head. The optical fiber 8 is arranged inside the hollow wrist 3 and inside the arm 1. In order to protect said fiber from too high torsion deformations due to robot arm and wrist movements during normal operating steps, an end 8a of the optical fiber 8 is connected to an adjacent portion 9 of an optical fiber by means of a rotary joint 10. Said rotary joint 10 connecting the two optical fibers 8, 9 one to the other is shown only schematically in the drawings. Such a component is indeed known per se and available on the market. It can therefore be made in any way according to known techniques.

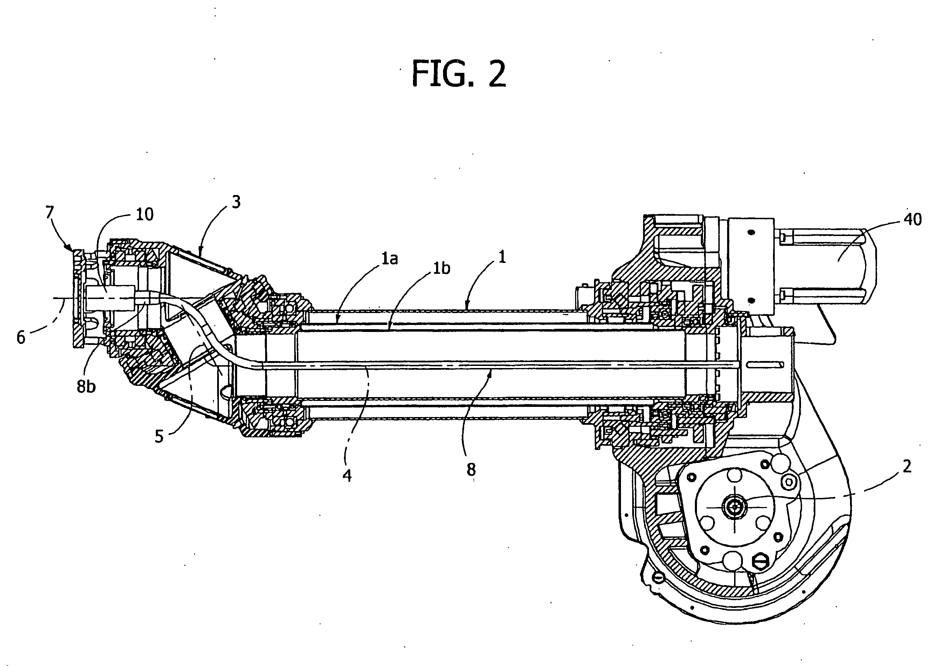

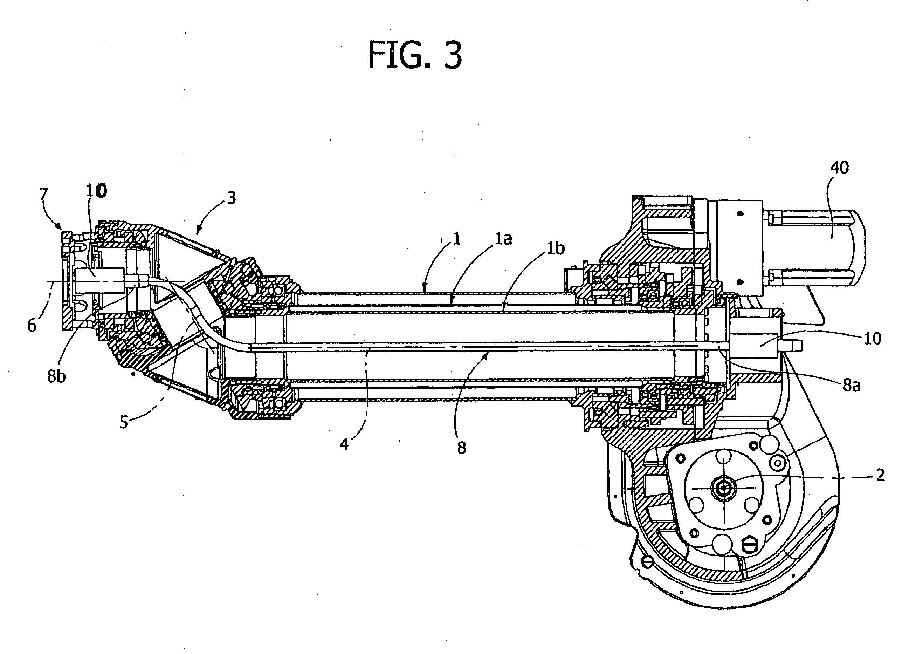

Figure 2 differs from Figure 1 in that the rotary joint 10 is arranged at the end 8b adjacent to the wrist, instead of being placed at the opposite end of the portion of optical fiber 8. Figure 3 shows a further variant in which the portion of optical fiber 8 is provided with rotary joints at its both ends.

Finally, Figure 4 shows the solution according to the present invention, in which the optical fiber 8 is provided with a rotary joint 10 at its end 8a, whereas at the end 8b it is connected to the connector 11 of a device 12 including a reflecting mirror, for sending the laser power beam towards a radial connector 13 to which is connected a further element of an optical fiber 14, which sends the laser beam to the laser focusing head referred to with 15 in Figure 4.

Obviously, though the basic idea of the invention remains the same, construction details and embodiments can widely vary with respect to what has been described and shown, though without leaving the framework of the present invention as defined in the appended claims.

## Claims

1. A robot for carrying out industrial operations by a laser beam, comprising a structure including at least one articulated arm (1), having a tubular shape and ending with a robot wrist (3), the latter having a substantially tubular hollow shape, in which said wrist (3) connects the aforesaid articulated arm (1) to a support (7) for mounting a laser focusing head (15) thereon, so that said support (7) can rotate around one or more axes (4-6) with respect to the terminal end of the articulated arm (1) of the robot, said robot further comprising one or more electric motors (40) for controlling the rotations of said robot wrist (3) around said axes (4-6), and in which said robot is further provided with a laser focusing head (15) mounted onto said support (7) and with an optical fiber (8) for bringing a laser beam from a laser generator to the aforesaid focusing head (15), wherein the optical fiber supplying the power laser beam to the laser focusing head has at least one portion (8) arranged inside the robot structure, and in particular inside the articulated arm (1) and inside the hollow wrist (3) of the robot,
**characterized in that** said optical fiber portion (8) is provided with a rotary joint (10) at one end (8a) opposite the hollow wrist (3), whereas close to the hollow wrist (3) it is connected to a connector (11) of a mirror reflecting device (12) sending the power laser beam in a radial direction towards a further element of an optical fiber (14) conveying the power laser beam to the laser focusing head (15).

2. The robot according to claim 1, **characterized in that** said portion of optical fiber (8) has at least one end connected to an adjacent portion of an optical fiber (9) through said rotary joint (10).

3. The robot according to claim 1 or 2, **characterized in that** said hollow wrist is of the type comprising three tubular elements rotatably mounted in sequence relative to each other around three respective coplanar axes (4, 5, 6), wherein the intermediate axis (5) forms an angle other than 90° with respect to each of the other two axes.

4. The industrial robot according to claim 3, **characterized in that** the aforesaid optical fiber portion (8) is provided with said rotary joint (10) at its end (8a) placed on the opposite side of the articulated arm with respect to the robot wrist (3).

5. The industrial robot according to claim 3, **characterized in that** the aforesaid portion of optical fiber (8) is provided with two rotary joints (10) mounted onto its two ends (8a, 8b), namely to its end (8b) adjacent to the hollow wrist (3) and to end (8a) placed on the opposite side of the articulated arm with respect to the hollow wrist (3).

## Patentansprüche

1. Roboter zum Durchführen industrieller Arbeitsvorgänge mit einem Laserstrahl, umfassend eine Struktur, die mindestens einen Gelenkarm (1) aufweist, welcher eine röhrenartige Form aufweist und mit einem Robotergelenk (3) endet, wobei Letzteres eine im Wesentliche röhrenförmige Hohlform aufweist, bei der das Gelenk (3) den vorgenannten Gelenkarm (1) mit einem Halter (7) verbindet, um einen Laserfokussierungskopf (15) darauf zu befestigen, so dass der Halter (7) um eine oder mehrere Achsen (4-6) in Bezug auf den Endpunkt des Gelenkarms (1) des Roboters rotieren kann, wobei der Roboter ferner einen oder mehrere elektrische Motoren (40) zum Steuern der Rotationen des Robotergelenks (3) um die Achsen (4-6) aufweist und wobei der Roboter ferner mit einem Laserfokussierungskopf (15) versehen ist, der auf dem Halter (7) befestigt ist, sowie mit einer Lichtleitfaser (8) zum Bringen eines Laserstrahls von einem Lasergenerator zu dem vorgenannten Fokussierungskopf (15), wobei die Lichtleitfaser, die den Leistungslaserstrahl zu dem Laserfokussierungskopf leitet, mindestens einen Abschnitt (8) aufweist, der innerhalb der Roboterstruktur angeordnet ist und insbesondere innerhalb des Gelenkarms (1) und innerhalb des hohlen Gelenks (3) des Roboters,
**dadurch gekennzeichnet, dass** der Lichtleitfaserabschnitt (8) mit einem Drehgelenk (10) an einem Ende (8a) gegenüber dem hohlen Gelenk (3) versehen ist, während er in der Nähe des hohlen Gelenks (3) mit einem Verbindungselement (11) einer Reflexspiegelvorrichtung (12) verbunden ist, die den Leistungslaserstrahl in radialer Richtung zu einem weiteren Element einer Lichtleitfaser (14) sendet, die den Leistungslaserstrahl zu dem Laserfokussierungskopf (15) transportiert.

2. Roboter nach Anspruch 1, **dadurch gekennzeichnet, dass** der Abschnitt der Lichtleitfaser (8) mindestens ein Ende aufweist, das über das Drehgelenk (10) mit einem benachbarten Abschnitt einer Lichtleitfaser (9) verbunden ist.

3. Roboter nach Anspruch 1 oder 2, **dadurch gekennzeichnet, dass** das hohle Gelenk von einer Art ist, die drei röhrenförmige Elemente aufweist, die aufeinander folgend angebracht, relativ zueinander um drei entsprechende koplanare Achsen (4, 5, 6) rotierbar sind, wobei die Zwischenachse (5) einen anderen Winkel als 90° in Bezug auf jede der beiden anderen Achsen bildet.

4. Industrieroboter nach Anspruch 3, **dadurch gekennzeichnet, dass** der vorgenannte Lichtleitfaserabschnitt (8) mit dem Drehgelenk (10) an seinem Ende (8a), das sich auf der gegenüberliegenden Seite des Gelenkarms in Bezug auf das Robotergelenk (3) angeordnet ist, befindet.

5. Industrieroboter nach Anspruch 3, **dadurch gekennzeichnet, dass** der vorgenannte Abschnitt der Lichtleitfaser (8) mit zwei Drehgelenken (10) versehen ist, die an seinen beiden Enden (8a, 8b) angebracht sind, und zwar an seinem Ende (8b), das sich neben dem hohlen Gelenk (3) befindet, und an seinem Ende (8a), das sich an der gegenüberliegenden Seite in Bezug auf das hohle Gelenk (3) befindet.

## Revendications

1. Robot pour l'exécution de tâches industrielles par un faisceau laser, comprenant une structure comportant au moins un bras articulé (1), ayant une forme tubulaire et se terminant par un poignet de robot (3), ce dernier ayant une forme creuse substantiellement tubulaire, dans lequel ledit poignet (3) connecte le bras articulé susmentionné (1) à un support (7) pour y monter une tête de focalisation du faisceau laser (15), de sorte que ledit support (7) peut tourner autour d'un ou de plusieurs axes (4-6) par rapport à l'extrémité terminale du bras articulé (1) du robot, ledit robot comprenant en outre un ou plusieurs moteurs électriques (40) pour la commande des rotations dudit poignet de robot (3) autour desdits axes (4-6) et dans lequel ledit robot est en outre muni d'une tête de focalisation du faisceau laser (15) montée sur ledit support (7) et d'une fibre optique (8) pour amener un faisceau laser d'un générateur laser à la tête de focalisation du faisceau laser (15), dans lequel la fibre optique fournissant le faisceau laser de puissance à la tête de focalisation du faisceau laser a au moins une partie (8) agencée à l'intérieur de la structure de robot, et en particulier à l'intérieur du bras articulé (1) et à l'intérieur du poignet articulé (3) du robot, **caractérisé en ce que** ladite partie de fibre optique (8) est munie d'un joint tournant (10) à une extrémité (8a) opposée au poignet creux (3), tandis que près du poignet creux (3) elle est connectée à un connecteur (11) d'un dispositif réfléchissant à miroir (12) envoyant le faisceau laser de puissance dans une direction radiale en direction d'un autre élément d'une fibre optique (14) véhiculant le faisceau laser de puissance vers la tête de focalisation du faisceau laser (15).

2. Robot selon la revendication 1, **caractérisé en ce que** ladite partie de fibre optique (8) a au moins une extrémité connectée à une partie adjacente d'une fibre optique (9) par ledit joint tournant (10).

3. Robot selon la revendication 1 ou 2, **caractérisé en ce que** ledit poignet creux est du type comprenant trois éléments tubulaires montés de manière tournante en séquence l'un par rapport à l'autre autour de trois axe coplanaires respectifs (4, 5, 6), dans lequel l'axe intermédiaire (5) forme un angle autre que 90° par rapport à chacun des deux autres axes.

4. Robot industriel selon la revendication 3, **caractérisé en ce que** la partie de fibre optique susmentionnée (8) est munie dudit joint tournant (10) à son extrémité (8a) placée sur le côté opposé du bras articulé par rapport au poignet de robot (3).

5. Robot industriel selon la revendication 3, **caractérisé en ce que** la partie susmentionnée de la fibre optique (8) est munie de deux joints tournants (10) montés sur ses deux extrémités (8a, 8b), à savoir sur son extrémité (8b) voisine du poignet creux (3) et sur son extrémité (8a) placée sur le coté opposé par rapport au poignet creux (3).
